# EUROPÄISCHE PATENTSCHRIFT

(11) **EP 2 581 202 B1**
(45) Veröffentlichungstag und Bekanntmachung des Hinweises auf die Patenterteilung: **20.05.2015**
(21) Anmeldenummer: 12188304.5
(22) Anmeldetag: 12.10.2012
(51) Int. Cl.: B29C 70/44, B29C 33/02, B29C 35/02, B29C 33/76, B29C 33/44

(54) **Formwerkzeug und Verfahren zur Herstellung eines Faserverbundteils**
Moulding tool and method of producing a composite part
Outil de formage et méthode de production d'une pièce en matériau composite

(30) Priorität: 13.10.2011 DE 102011054465
(43) Veröffentlichungstag der Anmeldung: 17.04.2013
(73) Patentinhaber: Deutsches Zentrum für Luft- und Raumfahrt e.V., 51147 Köln (DE)
(72) Erfinder: Ströhlein, Tobias, 38110 Braunschweig (DE); Kleineberg, Markus, 30966 Hemmingen (DE); Hühne, Christian, 30173 Hannover (DE)
(74) Vertreter: Aisch, Sebastian

(56) Entgegenhaltungen:
- CA-A1- 2 271 099
- JP-A- 63 095 914
- US-A- 3 836 110
- US-A1- 2010 140 842

## Beschreibung

Die Erfindung betrifft ein Formwerkzeug zur Herstellung eines Faserverbundbauteils. Die Erfindung betrifft ebenso ein Verfahren zur Herstellung eines Faserverbundbauteils, bei dem ein in einem Formwerkzeug eingebrachtes Faserhalbzeug mit einem Matrixharz injiziert wird.

Faserverbundbauteile aus Faserverbundwerkstoffen finden sich heute in vielen Anwendungsbereichen, bei denen eine hohe Stabilität bei gleichzeitig verringertem Gewicht gegenüber anderen Werkstoffen besonders vorteilhaft ist. Der Nachteil von Faserverbundbauteilen ist jedoch der recht aufwendig gestaltete Herstellungsprozess, der sich insbesondere für die Serienproduktion nur bedingt eignet. Darüber hinaus entstehen bei den komplizierten Herstellungsprozessen häufig Fehlteile, die als Ausschuss ausgesondert werden und somit die Gesamtkosten des Herstellungsprozesses erhöhen und die Produktivität senken.

Bei der Herstellung von Faserverbundbauteilen wird ein trockenes Faserhalbzeug, beispielsweise mit Kohlenstofffasern, mit einem Matrixharz injiziert und infiltriert und anschließend in einem Polymerisationsprozess ausgehärtet. In dem Polymerisationsprozess wird dabei das mit dem Matrixharz getränkte Faserhalbzeug mit Temperatur und Druck beaufschlagt, sodass eine möglichst vollständige und homogene Vernetzung des Matrixharzes mit dem Faserhalbzeug erreicht wird. Erst diese Vernetzungsreaktion verleiht den Faserverbundbauteilen ihre Stabilität und Haltbarkeit.

Zur Temperaturbeaufschlagung werden die mit Matrixharz getränkten Bauteile zusammen mit ihrer form- und strukturgebenden Formwerkzeuge meist in einen Konvektionsofen oder Autoklaven eingefahren, der anschließend das Bauteil mit Druck und Temperatur beaufschlagt und somit das Bauteil auf die benötigte Prozesstemperatur temperiert. Gerade bei hoch integralen Bauteilen, bei denen die Struktur der Lastpfade entsprechend filigran ausgeprägt werden, und die Bauteile somit eine hochkomplexe Struktur aufweisen, kommt es häufig zur Bildung von Fehlstellen im Inneren des Bauteils, da die Dicke des Bauteils die Temperierung im Inneren des Bauteils abschirmt.

Insbesondere dann, wenn zur Bildung der komplexen Struktur des Faserverbundbauteils Kernwerkzeuge verwendet werden, die beispielsweise zur Abformung von Hinterschneidungen verwendet werden, besteht das Problem, dass bei einer Beaufschlagung mit hohen Prozesstemperaturen es zu Spannungen im Material kommt, die schließlich zum Ausschuss des Bauteils führen. Denn in der Regel werden die Kernwerkzeuge durch das Faserverbundbauteil bei der Erwärmung abgeschirmt und erreichen somit nicht in der notwendigen Zeit die gewünschte Prozesstemperatur. Um dieses Problem zu vermeiden, muss der eigentliche Aushärtungsprozess stark verlangsamt werden, damit keine zusätzliche Spannung durch die inhomogene Temperaturverteilung im Bauteil induziert wird. Dies geht schließlich zu Lasten der Produktivität.

Um dieses Problem zu vermeiden ist es beispielsweise bekannt, ein Formwerkzeug mit einer Heizquelle auszustatten, beispielsweise durch eine elektrische Heizquelle, die dann das Bauteil mit thermischer Energie versorgt. Auch mit einem Wärme leitenden Fluid gefüllte Kanäle in dem Formwerkzeug werden in der Praxis, häufig in Form von Einzelanfertigungen, verwendet. Es ist darüber hinaus auch bekannt, die für die Herstellung der komplexen Struktur verwendeten Kernwerkzeuge mit einer Heizquelle, um die Kernwerkzeuge auf die gewünschte Prozesstemperatur zu bringen und somit die inneren Spannungen bei der Temperierung des Bauteils zu vermeiden.

Allerdings haben die in der Praxis verwendeten Heizquellen den entscheidenden Nachteil, dass sie von außen mit Energie, sei es nun elektrische Energie oder thermische Energie, gespeichert in Fluiden, kontinuierlich versorgt werden müssen, sodass die Heizquellen immer in Verbindung mit einer entsprechenden Energiequelle stehen müssen. Wird das Bauteil insbesondere in einem Vakuum abgedichteten Aufbau hergestellt, so ergeben sich hierdurch Probleme bei der Zuführung der entsprechenden Energie, wodurch potentielle Undichtigkeiten in dem Herstellungsprozess entstehen können, der auf Leckagen sehr sensibel reagiert. Denn sobald der Vakuumaufbau undicht wird, z.B. durch die Kabel oder Leitungen, fehlt der geringere Prozessunterdruck und unreparierbarer Ausschuss ist die Folge.

Ein weiteres Problem insbesondere bei dickwandigen Faserverbundbauteilen entsteht durch die exotherme Harzvernetzungsreaktion. Denn aufgrund der harzimmanenten Eigenschaft, bei der Vernetzungsreaktion thermische Energie freizusetzen, kann es in einigen Bereichen des Faserverbundbauteils zu lokalen Überhitzungen kommen, die ebenfalls die Bauteilqualität mindern und zum Ausschuss führen können. Auch derlei exothermen Reaktionen muss bei der Temperierung des Bauteils ebenfalls Rücksicht genommen werden, was wiederum den Herstellungsprozess an sich verlangsamt.

Aus der US 2010/0140842 A1 sind ein Formwerkzeug gemäß dem Oberbegriff des Anspruchs 1 und ein Verfahren gemäß dem Oberbegriff des Anspruchs 7 bekannt, bei dem ein passives Temperaturkontrollsystem integriert ist, um überschüssige Wärmeenergie, die bei der Harzvernetzungsreaktion entsteht, sicher abführen zu können. Das passive Temperaturkontrollsystem weist dabei ein Material auf, das bei Phasenänderung die überschüssige thermische Wärmeenergie aufnimmt.

Aus der US 3,836,110 ist ein Formwerkzeug zur Herstellung von Kunststoffbauteilen bekannt, bei dem ebenfalls ein passives Kühlsystem vorgesehen ist, das ein schmelzbares Kühlmittel enthält, um so die durch das Kühlmittel aufgenommene Wärmeenergie aus dem Formwerkzeug abführen zu können.

Aufgabe der vorliegenden Erfindung ist es ein verbessertes Formwerkzeug und ein verbessertes Verfahren zur Herstellung eines Faserverbundbauteils anzugeben, bei denen insbesondere bei hochkomplexen Bauteilstrukturen Qualitätsverminderungen vermieden werden und höhere Prozesszeiten bei der Herstellung gefahren werden können, ohne die Bauteilqualität zu beeinträchtigen, wodurch der Anteil der Ausschussware gesenkt und die Produktivität erhöht werden kann.

Die Aufgabe wird mit einem Formwerkzeug gemäß dem Anspruch 1 gelöst.

Erfindungsgemäß wird somit vorgesehen, dass das Formwerkzeug in zumindest einem Teilbereich einen Hohlraum derart aufweist, dass mindestens ein autarker Latentwärmespeicher und/oder thermochemischer Wärmespeicher in dem Formwerkzeug angeordnet werden kann, damit bei Aktivierung des Latentwärmespeichers und/oder thermochemischen Wärmespeichers das Formwerkzeug autark durch die Wärmespeicher temperiert werden kann. Durch die autarke und lokale Temperierung des Formwerkzeuges können somit die Temperaturdifferenzen innerhalb des Bauteils reduziert und die bei komplexen und dicken Faserverbundbauteilen entstehenden Spannungen vermieden werden.

Der mindestens eine autarke Latentwärmespeicher und/oder thermochemischer Wärmespeicher zur autarken Temperierung des Formwerkzeuges in dem Teilbereich ist dabei derart vorgesehen, dass bei Aktivierung des Latentwärmespeicher und/oder thermochemischer Wärmespeicher Wärmeenergie zur autarken Temperierung des Formwerkzeuges abgegeben wird.

Unter einem Formwerkzeug im Sinne der vorliegenden Erfindung kann dabei die zur Herstellung der formgebenden Struktur des Faserverbundbauteils verwendeten Werkzeuge verstanden werden, die dann zusammen mit den dort eingebrachten Fasergelegen in einem Autoklaven oder Ofen eingefahren werden können. Unter einem Formwerkzeug kann aber auch nur ein Teil des gesamten Formwerkzeuges verstanden werden, beispielsweise ein separates Kernwerkzeug zur Bildung von Hinterschneidungen.

Ein Latentwärmespeicher ist ein Wärmespeicher, der sich die Ausnutzung der latenten Wärmespeicherung (auch als latente Wärme bezeichnet) zu Eigen macht. Als latente Wärme wird dabei die bei einem Phasenübergang abgegebene Wärmemenge bezeichnet. Der Latentwärmespeicher macht sich dabei diese Eigenschaft zu Eigen, die in dem Speichermedium aufgenommene Wärmeenergie bei Einleitung des Phasenüberganges wieder abzugeben. Durch Zuführung von thermischer Energie kann dieser Prozess wieder umgekehrt werden, sodass thermische Wärmeenergie wieder gespeichert werden kann.

So ist es beispielsweise bekannt, dass spezielle Salzlösungen, wie beispielsweise Natriumacetat-Trihydrat sowie Alaune oder spezielle Paraffinlösungen thermische Energie aufnehmen können und im flüssigen Zustand speichern. Wird nun ein Kristallisationskeim gesetzt, so breitet dieser sich in der gesamten Lösung aus und führt zu einem Phasenübergang bzw. Verfestigung des Speichermediums, wobei die in dem Speichermedium gespeicherte latente Wärme freigesetzt wird. Dieser Prozess ist dabei derart reversibel, dass durch Zuführung von thermischer Energie ein erneuter Phasenrückübergang stattfinden kann, sodass das Speichermedium wieder verflüssigt wird und somit thermische Energie speichert.

Durch die Verwendung eines Latentwärmespeichers in einem Formwerkzeug, insbesondere in einem Kernwerkzeug, zur autarken Temperierung kann somit für die Zeit des Herstellungsprozesses auf jegliche Zuführung von Energie von außen verzichtet werden, wodurch der vakuumabgedichtete Aufbau vereinfacht und Leckagen oder Undichtigkeiten vermieden werden können. Dabei haben die Erfinder erkannt, dass die von einem Latentwärmespeicher abgegebene thermische Energie ausreichend ist, um eine Temperierung des Formwerkzeuges autark derart zu erreichen, dass Spannungen im Bauteil bei der Prozessdurchführung vermieden werden können.

Ein weiterer Vorteil von Latentwärmespeichern besteht darin, dass nach Abgabe der thermischen Energie die im Inneren des Bauteils entstehende Wärme aufgrund der exothermen Vernetzungsreaktion durch den Latentwärmespeicher wieder aufgenommen werden kann, ohne dass dieser sich selbst zu stark erwärmt. Denn eine weitere Eigenschaft von latenter Wärme besteht darin, dass diese Wärme in dem Speichermedium gespeichert wird, ohne dass sich die Temperatur des Speichermediums selbst verändert. Somit kann die bei der exothermen Vernetzungsreaktion entstehende thermische Wärme zielgerichtet abgeführt werden und lokale Überhitzungen vermieden werden.

Denkbar ist aber auch, dass das Formwerkzeug in dem Hohlraum zumindest einen thermochemischen Wärmespeicher zur autarken Temperierung des Formwerkzeuges aufweist. Ein thermochemischer Wärmespeicher speichert dabei Wärme aufgrund einer endothermen Reaktion und gibt diese durch eine exotherme Reaktion wieder ab. Ein Beispiel hierfür ist der sogenannte Sorptionsspeicher, bei dem ein hygroskopisches Material, wie beispielsweise ein Silicagel, unter Zusammenführung mit einem Gas, beispielsweise Wasserdampf, aufgrund der Adsorption Wärme freisetzt. Denn ein hygroskopisches Material hat eine extrem große Oberfläche, wo sich der Wasserdampf absetzen kann und aufgrund der Adsorption die Energie freisetzt. Durch Zuführung von thermischer Wärme wird das hygroskopische Material getrocknet (Desorption) und die aufgewendete Wärmeenergie wird ähnlich wie bei der latenten Wärme gespeichert. Weitere denkbare hygroskopische Materialien sind beispielsweise Zeolithe oder Metallhydride.

Vorteilhafterweise ist der in dem Hohlraum des Formwerkzeuges angeordnete Latentwärmespeicher derart eingerichtet, dass von außen ein Kristallisationskeim erzeugt werden kann. Ein derartiger Kristallisationskeim kann beispielsweise mit Hilfe eines "Knackfrosch" erzeugt werden, wie er beispielsweise bei handelsüblichen Wärmekissen bekannt ist.

Die Aufgabe wird im Übrigen auch mit dem Verfahren der eingangs genannten Art erfindungsgemäß gelöst durch die Schritte:
a) Speichern von Wärmeenergie in mindestens einem in einem Hohlraum eines Formwerkzeuges vorgesehenen autarken Latentwärmespeicher und/oder thermochemischen Wärmespeicher,
b) Einbringen des Faserhalbzeuges in das Formwerkzeug zur Bildung der formgebenden Struktur des späteren Faserverbundbauteils und
c) Aktivieren des Latentwärmespeichers und/oder thermochemischen Wärmespeichers derart, dass Wärmeenergie zur autarken Temperierung des Formwerkzeuges abgegeben wird, und Durchführen des Faserverbund-Herstellungsprozesses.

Vorteilhafte Ausgestaltungen des Verfahrens finden sich in den entsprechenden Unteransprüchen.

Bei dem Einbringen des Faserhalbzeuges in das Formwerkzeug wird dabei der Prozess verstanden, dass das Faserhalbzeug, entweder das trockene Fasergelege oder ein vorgetränktes Prepreg, in dem Formwerkzeug so drapiert wird, dass sich die spätere Struktur des Faserverbundbauteils bildet. Dabei können auch Kernwerkzeuge zur Ausformung von Hinterschneidungen und ähnliches zur Bildung der Struktur verwendet werden.

Die Erfindung wird anhand der beigefügten Zeichnungen beispielhaft näher erläutert. Es zeigen:
- Figur 1: - schematische Darstellung der Bildung einer Hinterschneidung
- Figur 2: - schematische Darstellung eines erfindungsgemäßen Kernwerkzeuges.

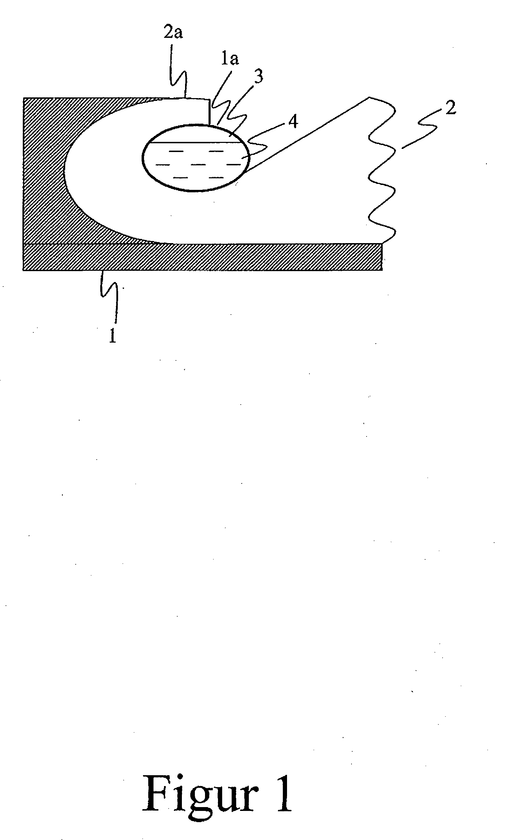

Figur 1 zeigt ein Formwerkzeug 1 zur Herstellung eines Faserverbundbauteils 2, das eine Hinterschneidung 2a aufweisen soll. Hierfür weist das Formwerkzeug 1 einen separaten Teil 1 a auf, das als Kernwerkzeug ausgebildet ist und derart mit dem herzustellenden Faserverbundbauteil 2 zusammenwirkt, dass die Hinterschneidung 2a gebildet werden kann.

Um eine homogene Temperaturverteilung zu erreichen und große Temperaturdifferenzen während des Herstellungsprozesses zu vermeiden, ist das Kernwerkzeug 1 a temperierbar ausgebildet. Durch die Temperierung des Kernwerkzeuges 1 a wird nicht nur von außen nach innen eine thermische Energie aufgebracht, sondern es kann auch thermische Energie von dem Kernwerkzeug 1a ausgehend in Richtung Bauteil 2, 2a geführt werden.

Das Kernwerkzeug 1a weist im Inneren einen Hohlraum 3 auf, in dem ein Latentwärmespeicher 4 angeordnet ist. Der Latentwärmespeicher 4 kann beispielsweise eine übersättigte Salzlösung oder Paraffinlösung sein, die im flüssigen Zustand thermische Energie speichert. Durch Bildung eines Kristallisationskeimes erfolgt ein Phasenübergang vom flüssigen in den festen Zustand, wodurch die in der Salz- oder Paraffinlösung gespeicherte latente Wärme freigesetzt wird. Das Kernelement 1a wirkt somit als innenliegendes Heizelement, wobei auf jegliche Anschlüsse in Form von externen Leitungen oder Kanälen verzichtet werden kann. Hierdurch wird insbesondere der vakuumabgedichtete Aufbau, der für die Infiltration des Matrixharzes notwendig ist, wesentlich vereinfacht. Das Risiko, dass durch externe Leitungen oder Kanäle Leckagen in den vakuumabgedichteten Aufbau entstehen und somit Fehlstellen im Bauteil, kann somit drastisch reduziert werden.

Wird bei der Vernetzung des Matrixharzes mit dem Faserhalbzeug aufgrund der exothermen Vernetzungsreaktion thermische Wärme freigesetzt, so kann diese, wenn der Latentwärmespeicher 4 des Kernwerkzeuges 1a seine gespeicherte Wärme freigesetzt hat, diese aus der exothermen Verletzungsreaktion stammende thermische Energie aufnehmen, und so die überschüssige Wärmeenergie binden. Hierbei werden die zuvor gebildeten Kristalle wieder verflüssigt, wodurch der Kern für den nächsten Zyklus bereitstünde.

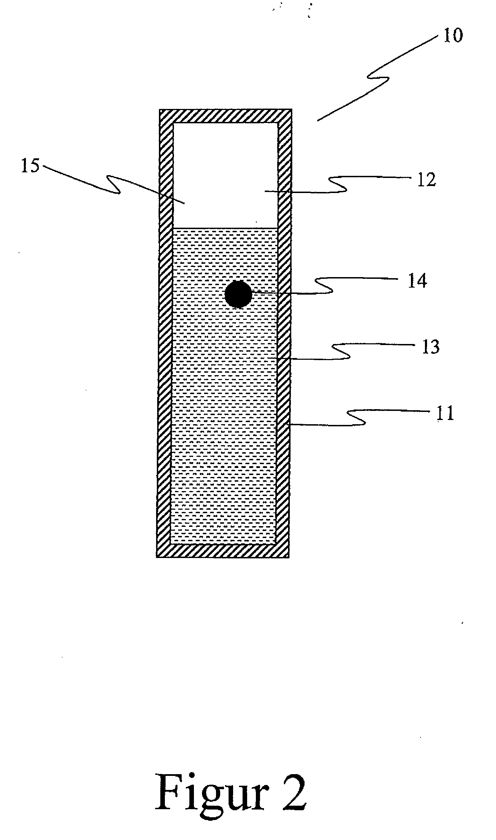

Figur 2 zeigt schematisch ein einzelnes Kernelement 10, das als Formwerkzeug zur Herstellung eines Faserverbundbauteils verwendet werden kann. Das Kernwerkzeug 10 weist eine Hülle 11 auf und ist als Hohlkern derart ausgebildet, dass im Inneren ein Hohlraum 12 vorhanden ist. In dem Hohlraum 12 ist als Latentwärmespeicher eine Salzlösung aus Natriumacetat-Trihydrat 13 vorgesehen, die im flüssigen Zustand aufgrund des Prinzips der latenten Wärme thermische Energie speichert, ohne selbst die Temperatur zu verändern. Des Weiteren befindet sich in der Natriumacetat-Trihydratlösung 13 ein Kristallisationskeimerzeuger 14, der aufgrund einer mechanischen Veränderung einen Kristallisationskeim auslöst und somit den Phasenübergang von dem flüssigen in den kristallisierten festen Zustand herbeiführt, wodurch die gespeicherte Wärme freigesetzt wird.

Im flüssigen Zustand ist ein oberer Teil 15 zwecks Druckausgleichs ungefüllt bzw. mit Luft gefüllt, sodass sich beim Kristallisationsvorgang die Wärmespeicher-Lösung 13 ausdehnen kann. Der gesamte Hohlraum 12 wird luft- bzw. vakuumdicht versiegelt, sodass keinerlei Fluide während des Herstellungsprozesses aus dem Kernwerkzeug 10 austreten können und somit das Bauteil schädigen können.

Derartige Kernwerkzeuge 10 funktionieren somit vollständig autark, sodass keine entsprechenden Leitungen von außen erforderlich sind. Darüber hinaus kann aufgrund der Reversibilität des Prozesses die bei der exothermen Reaktion entstehende thermische Energie aufgenommen werden, wodurch die Gefahr von Überhitzungen vermieden wird. Darüber hinaus ist es denkbar, dass neben den Werkzeugkernen auch die Ober- bzw. Unterschalen von Formwerkzeugen mit einem derartigen Latentwärmespeicher bzw. thermochemischen Wärmespeicher ausgestattet werden, um so eine vollständige und gleichmäßige Temperierung des Bauteils zu ermöglichen. Auch hierdurch kann der Anlagenaufwand verringert werden, da nunmehr keinerlei Leitungen oder Kanäle für eine externe Wärmesteuerung in den vakuumabgedichteten Aufbau eingebracht werden müssen.

## Patentansprüche

1. Formwerkzeug (1, 1 a, 10) zur Herstellung eines Faserverbundbauteils (2), wobei das Formwerkzeug (1a, 10) in zumindest einem Teilbereich einen Hohlraum (3, 12) aufweist, in dem mindestens ein autarker Latentwärmespeicher (4, 13) und/oder thermochemischer Wärmespeicher zur autarken Temperierung des Formwerkzeuges (1a, 10) in dem Teilbereich vorgesehen ist, **dadurch gekennzeichnet, dass** der mindestens eine autarke Latentwärmespeicher (4, 13) und/oder thermochemische Wärmespeicher zur autarken Temperierung des Formwerkzeuges (1 a, 10) in dem Teilbereich derart vorgesehen ist, dass bei Aktivierung des Latentwärmespeichers (4, 13) und/oder thermochemischen Wärmespeichers Wärmeenergie zur autarken Temperierung des Formwerkzeuges abgegeben wird.

2. Formwerkzeug nach Anspruch 1, **dadurch gekennzeichnet, dass** das Formwerkzeug ein Kernwerkzeug (1a, 10) ist, das als Hohlkern ausgebildet ist.

3. Formwerkzeug nach einem der vorhergehenden Ansprüche, **dadurch gekennzeichnet, dass** der in dem Hohlraum (3, 12) vorgesehene Latentwärmespeicher eine Salzlösung, Paraffinlösung, Natriumacetat-Trihydratlösung oder Alaune enthält.

4. Formwerkzeug nach einem der vorhergehenden Ansprüche, **dadurch gekennzeichnet, dass** der in dem Hohlraum (3, 12) vorgesehene thermochemische Wärmespeicher ein hygroskopisches Material, insbesondere Silicagel, Zeolith oder Metallhydride, enthält.

5. Formwerkzeug nach einem der vorhergehenden Ansprüche, **dadurch gekennzeichnet, dass** der autarke Latentwärmespeicher und/oder thermochemische Wärmespeicher nach Abgabe der gespeicherten Wärmeenergie zur Aufnahme der bei der exothermen Vernetzungsreaktion zwischen Matrixharz und Faserhalbzeug entstehenden Wärmeenergie ausgebildet ist.

6. Formwerkzeug nach einem der vorhergehenden Ansprüche, **dadurch gekennzeichnet, dass** der autarke Latentwärmespeicher ein Kristallisationselement (14) zur Erzeugung eines Kristallisationskeimes aufweist.

7. Verfahren zur Herstellung eines Faserverbundbauteils, bei dem ein in ein Formwerkzeug eingebrachtes Faserhalbzeug mit einem Matrixharz injiziert wird, **gekennzeichnet durch** die Schritte:
a) Speichern von Wärmeenergie in mindestens einem in einem Hohlraum eines Formwerkzeuges vorgesehenen autarken Latentwärmespeicher und/oder thermochemischen Wärmespeicher,
b) Einbringen des Faserhalbzeuges in das Formwerkzeug zur Bildung der formgebenden Struktur des späteren Faserverbundbauteils, und
c) Aktivieren des Latentwärmespeichers und/oder thermochemischen Wärmespeichers derart, dass Wärmeenergie zur autarken Temperierung des Formwerkzeuges abgegeben wird, und Durchführen eines Faserverbund-Herstellungsprozesses.

8. Verfahren nach Anspruch 7, **gekennzeichnet durch** Speichern der Wärmeenergie in dem Latentwärmespeicher und/oder thermochemischen Wärmespeicher **durch** Zuführungen von thermischer Energie.

9. Verfahren nach Anspruch 7 oder 8, **gekennzeichnet durch** Anordnen des Formwerkzeuges in einem vakuumabgedichteten Aufbau zur Durchführung des Faserverbund-Herstellungsprozesses.

## Claims

1. Moulding tool (1, 1a, 10) for producing a fibre composite component (2), wherein in at least one partial region the moulding tool (1a, 10) has a cavity (3, 12), in which at least one self-sufficient latent heat store (4, 13) and/or thermochemical heat store for self-sufficiently controlling the temperature of the moulding tool (1a, 10) in the partial region is provided, **characterized in that** the at least one self-sufficient latent heat store (4, 13) and/or thermochemical heat store for self-sufficiently controlling the temperature of the moulding tool (1a, 10) in the partial region is provided in such a manner that heat energy for self-sufficiently controlling the temperature of the moulding tool is emitted when the latent heat store (4, 13) and/or thermochemical heat store is activated.

2. Moulding tool according to Claim 1, **characterized in that** the moulding tool is a core tool (1a, 10) in the form of a hollow core.

3. Moulding tool according to either of the preceding claims, **characterized in that** the latent heat store provided in the cavity (3, 12) contains a salt solution, a paraffin solution, a sodium acetate trihydrate solution or alums.

4. Moulding tool according to one of the preceding claims, **characterized in that** the thermochemical heat store provided in the cavity (3, 12) contains a hygroscopic material, in particular silica gel, zeolite or metal hydrides.

5. Moulding tool according to one of the preceding claims, **characterized in that** the self-sufficient latent heat store and/or thermochemical heat store is designed, after the emission of the stored heat energy, for the uptake of the heat energy which arises in the exothermal crosslinking reaction between the matrix resin and the semifinished fibre product.

6. Moulding tool according to one of the preceding claims, **characterized in that** the self-sufficient latent heat store comprises a crystallization element (14) for generating a crystallization nucleus.

7. Method for producing a fibre composite component, in which a semifinished fibre product introduced into a moulding tool is injected with a matrix resin, **characterized by** the steps of:
a) storing heat energy in at least one self-sufficient latent heat store and/or thermochemical heat store provided in a cavity of a moulding tool,
b) introducing the semifinished fibre product into the moulding tool to form the shaping structure of the later fibre composite component, and
c) activating the latent heat store and/or thermochemical heat store in such a manner that heat energy for self-sufficiently controlling the temperature of the moulding tool is emitted, and carrying out a fibre composite production process.

8. Method according to Claim 7, **characterized by** storing the heat energy in the latent heat store and/or thermochemical heat store by supplying thermal energy.

9. Method according to Claim 7 or 8, **characterized by** arranging the moulding tool in a vacuum-sealed structure for carrying out the fibre composite production process.

## Revendications

1. Outil de formage (1, 1a, 10) pour la fabrication d'une pièce composite de fibres (2), dans lequel l'outil de formage (1a, 10) présente, dans au moins une région partielle, une cavité (3, 12) dans laquelle il est prévu au moins un accumulateur de chaleur latente (4, 13) et/ou un accumulateur de chaleur thermochimique autarcique pour l'équilibrage autarcique de la température de l'outil de formage (1a, 10) dans la région partielle, **caractérisé en ce que** ledit au moins un accumulateur de chaleur latente (4, 13) et/ou accumulateur de chaleur thermochimique autarcique est prévu pour l'équilibrage autarcique de la température de l'outil de formage (1a, 10) dans la région partielle de telle manière que, lors de l'activation de l'accumulateur de chaleur latente (4, 13) et/ou de l'accumulateur de chaleur thermochimique, de l'énergie thermique soit cédée pour l'équilibrage autarcique de la température de l'outil de formage.

2. Outil de formage selon la revendication 1, **caractérisé en ce que** l'outil de formage est un outil de base (1a, 10), qui est réalisé sous forme de noyau creux.

3. Outil de formage selon l'une quelconque des revendications précédentes, **caractérisé en ce que** l'accumulateur de chaleur latente prévu dans la cavité (3, 12) contient une solution saline, une solution de paraffine, une solution d'acétate de sodium trihydraté ou des aluns.

4. Outil de formage selon l'une quelconque des revendications précédentes, **caractérisé en ce que** l'accumulateur de chaleur thermochimique prévu dans la cavité (3, 12) contient un matériau hygroscopique, en particulier du gel de silice, une zéolithe ou des hydrures métalliques.

5. Outil de formage selon l'une quelconque des revendications précédentes, **caractérisé en ce que** l'accumulateur de chaleur latente et/ou l'accumulateur de chaleur thermochimique autarcique est réalisé de façon à capter, après la cession de l'énergie thermique accumulée, l'énergie thermique générée par la réaction de réticulation exothermique entre la résine de matrice et le demi-produit de fibres.

6. Outil de formage selon l'une quelconque des revendications précédentes, **caractérisé en ce que** l'accumulateur de chaleur latente autarcique présente un élément de cristallisation (14) pour la production d'un germe de cristallisation.

7. Procédé de fabrication d'une pièce composite de fibres, dans lequel on injecte avec une résine de matrice un demi-produit de fibres introduit dans un outil de formage, **caractérisé par** les étapes suivantes:
a) accumuler de l'énergie thermique dans au moins un accumulateur de chaleur latente et/ou un accumulateur de chaleur thermochimique autarcique prévu dans une cavité d'un outil de formage,
b) introduire le demi-produit de fibres dans l'outil de formage pour la formation de la structure créant la forme de la future pièce composite de fibres, et
c) activer l'accumulateur de chaleur latente et/ou l'accumulateur de chaleur thermochimique de telle manière que de l'énergie thermique soit cédée pour l'équilibrage autarcique de la température de l'outil de formage, et exécuter un processus de fabrication d'un composite de fibres.

8. Procédé selon la revendication 7, **caractérisé par** l'accumulation de l'énergie thermique dans l'accumulateur de chaleur latente et/ou l'accumulateur de chaleur thermochimique par des apports d'énergie thermique.

9. Procédé selon la revendication 7 ou 8, **caractérisé par** l'installation de l'outil de formage dans une structure étanche sous vide pour l'exécution du processus de fabrication du composite de fibres.
